# EUROPEAN PATENT SPECIFICATION

(11) **EP 1 113 205 B1**
(45) Date of publication and mention of the grant of the patent: **16.11.2005**
(21) Application number: 00311662.1
(22) Date of filing: 22.12.2000
(51) Int. Cl.: F16K 15/00, F16K 15/02

(54) **Check valve**
Rückschlagventil
Valve à une voie

(30) Priority: 27.12.1999 JP 36900499
(43) Date of publication of application: 04.07.2001
(73) Proprietor: NIPPON PILLAR PACKING CO., LTD., Osaka (JP)
(72) Inventor: Ishida, Takuya, c/o Nippon Pillar Packing Co. Ltd, Shimo Uchigami, Sanda City, Hyogo Pref (JP)
(74) Representative: Smith, Peter James

(56) References cited:
- GB-A- 2 173 575
- US-A- 4 091 839
- US-A- 5 174 327
- US-A- 5 240 037
- US-A- 5 794 657
- US-A- 5 848 605

## Description

### Field of the Invention

The invention relates to a synthetic resinous check valve provided in a pipeline in which a washing solution or a corrosive solution flows as, for example, in a semiconductor manufacturing process.

### Background Art

A high degree of cleanliness is required from a check valve provided within a pipeline for supplying a washing solution or an etching solution in a washing step or etching step during a semiconductor manufacturing process. To avoid contamination, especially due to metal ions, the check valve may be made of a synthetic resin such as a fluororesin (e.g., PFA, PP, PE) which exhibits excellent corrosion and wear resistance, as disclosed for example in US-A-5848605.

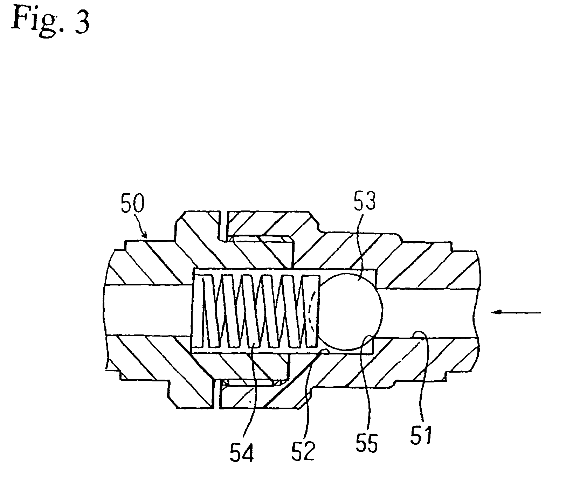

Such a check valve is shown in Fig. 3. A channel 51 passing through a PFA check valve main body 50 is provided with a large-diameter valve housing chamber 52 which houses a ball valve 53 and a spring 54 biasing the ball valve 53 in a valve-closing direction. The ball valve 53 and the spring 54 are also made of a synthetic resin such as PFA.

With this check valve, the channel 51 arranged on the upstream side (right side in the figure) of the valve housing chamber 52 is held in a valve-closed state when the ball valve 53 is forced by the spring 54 against a marginal open edge (valve seat) 55 of the valve housing chamber 52. If, on the other hand, a fluid pressure of a fluid flowing into the channel 51 is sufficient to overcome the biasing force of the spring 54, the ball valve 53 moves in a valve-opening direction and the spring 54 is compressed. In this arrangement, the ball valve 53 is separated from the valve seat 55 and thus fluid is permitted to flow downstream through the valve housing chamber 52.

This check valve, however, suffers from a problem that the biasing force of the spring 54 weakens over time and accordingly the sealing performance of the valve gradually deteriorates. In particular, the spring 54 is liable to be put into a fully compressed state in response to the pressure of an incoming fluid, thereby generating a large internal pressure. When used repeatedly in such a stressed state, the spring 54, which is made of a synthetic resin, is subjected to stress relaxation (creep) which induces deterioration of its biasing force. This in turn reduces the biasing force of the spring 54 in the valve-closed state, thus making it impossible to maintain sufficient check valve functions.

US-A-5794657 discloses a check valve for a fuel delivery system according to the preamble of present claim 1, wherein the valve body has a cavity surrounded by a four-leg structure serving as a retainer and guide for the spring. In a fuel delivery system it is not necessary to avoid contamination due to metal ions and the preferred materials disclosed for the valve body and the valve member are brass or aluminium alloy and the preferred material disclosed for the spring is a corrosion resistant spring steel.

### Summary of the Invention

In view of the above, it is an objective of the present invention to provide a check valve that can maintain stable functionality by suppressing deterioration in the biasing force of a spring made of a synthetic resin.

The above objective is achieved by a check valve comprising a check valve main body having a channel passing therethrough, a valve member provided within the channel for opening and closing the channel, a spring urging the valve member in a valve-closing direction such that when a fluid pressure in excess of a biasing force of the spring is applied to the valve member in a valve-opening direction, the spring is compressed and the valve member moves in the valve-opening direction to open the channel wherein the check valve main body, regulating means for regulating an amount of movement of the valve member in the valve-opening direction in order to prevent full compression of the spring, and spring holding means to suppress radial displacement of the spring; characterised in that the check valve main body, the valve member and the spring are made from a synthetic resin and the spring (7) is integrally formed with the valve member (6).

If the above-mentioned valve member is subjected to a fluid pressure in the valve-opening direction in excess of a biasing force of the spring, the spring is compressed and the valve member is opened allowing fluid to flow through the channel. With this configuration, even when a large fluid pressure is applied to the valve member in its opening direction, the valve member is regulated in its movement by the regulating means, thus the spring is never subjected to full compression. Accordingly, it is possible to suppress deterioration due to stress relaxation in the biasing force of the spring, even though it is made of a synthetic resin.

The provision of spring holding means is particularly advantageous to suppress displacement of the spring in a radial direction and thereby inhibit axial shift between the spring and the valve member. As a result, deviation can be suppressed from occurring between the direction of the biasing force of the spring and the direction of movement of the valve member. Accordingly, in the valve-closed state, the valve member exerts a uniform pressure about an entire circumference of the valve seat, thereby providing good sealing performance.

Because the spring is formed integrally with the valve member, it is possible to even more securely suppress axial shift from occurring between the spring and the valve member, thus improving the sealing performance in the valve-closed state.

Preferably, a valve-closing direction side of the valve member is provided with a sealing member having larger elasticity than the valve member. If both the valve seat and the sealing ring were made of the same material such as PFA, upon repeated valve-closing operation, plastic deformation may develop locally at a position where stress is concentrated, thus deteriorating sealing performance. To guard against this, one of the two, and preferably the sealing ring, is formed of a material having higher elasticity than the other to relax the concentration of the stress, in order to keep a uniform sealing everywhere on the circumference of the valve seat, thus maintaining good sealing performance.

To help in the assembly of a check valve according to the invention, the check valve main body may be divided across the channel into an upstream side main body and a downstream side main body. The spring and valve member can then easily be inserted into one or both of these components which are then sealed together.

Furthermore, a lip sealing portion extending in the direction of the channel may be provided at the junction where the upstream-side main body faces the downstream-side main body. Thus, this arrangement provides further suppression of liquid leakage.

The upstream-side main body and the downstream-side main body may be sealed together by welding of an outer periphery of a junction where the upstream-side main body and the downstream-side main body face each other. Thus, with such a sealing construction, it is possible to provide a check valve with improved performance for preventing liquid-leakage etc.

Preferably, the components of the check valve are made from a fluororesin. Accordingly, such a check valve will exhibit excellent corrosion and wear resistance at the same time as being free of metal elution even when the fluid is a corrosive fluid.

### Brief Description of the Drawings

Preferred embodiments of the invention are described in detail with reference to the accompanying drawings in which:-
Fig. 1A is a external view showing an overall configuration of a check valve which is not a part of the invention;
Fig. 1B is a cross-sectional view through the check valve of Fig. 1A, wherein the check valve is in its valve closed state;
Fig. 1C is a perspective view illustrating the valve member and spring mounted in the check valve of Fig. 1A;
Fig. 1D corresponds with Fig. 1B showing the check valve in its valve-opened state;
Fig. 2A is a cross-sectional view through a check valve according to a second embodiment of the invention, wherein the check valve is in its valve-closed state;
Fig. 2B is a perspective view illustrating the valve member, spring and sealing ring mounted in the check valve of Fig. 2A;
Fig. 2C corresponds with Fig. 2A showing the check valve in its valve-opened state; and
Fig. 3 is a cross-sectional view illustrating the main components of a prior art check valve.

### Description of the Preferred Embodiments

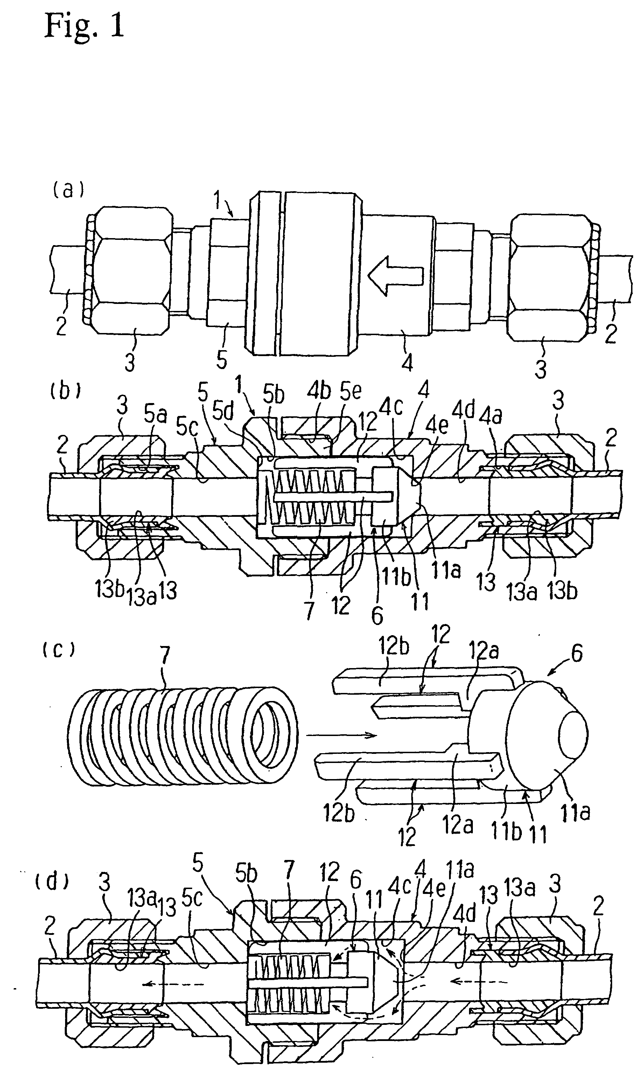

A check valve which is not a part of the invention is shown in Figs. 1A-1D. The check valve has a union joint configuration, whereby each opposing end of a valve main body (check valve main body) 1 is secured to a tube 2 by a nut 3. The valve main body 1 is, as shown in Fig. 1B, divided into an upstream-side main body (hereinafter called IN-side main body) 4 shown on the right side in the figure and a downstream-side main body (hereinafter called OUT-side main body) 5 in such a configuration that these two main bodies are linked with each other in a coaxial manner. It should be noted that all components of the check valve according to this embodiment are made from a synthetic resin such as PFA, which exhibits excellent corrosion and wear resistance.

The IN-side main body 4 has at its right end a tube connecting recess 4a extending axially from an end surface. A tube 2 containing a sleeve 13, which will be described in more detail later on, is inserted and connected to the recess 4a. At its left end, the IN-side main body 4 has a main body-linking recess 4b and a smaller-diameter valve housing space 4c to the right of the linking recess 4b. The valve housing space 4c and the tube connecting recess 4a are in communication with each other by means of an IN-side orifice channel portion 4d to form a stepped through hole along the axis of the IN-side main body 4.

A valve seat 4e is formed at the stepped edge between the IN-side orifice channel portion 4d and the valve housing space 4c. The valve member 6 engages with and disengages from the valve seat 4e to permit and prevent fluid flow respectively. A male screw is formed on the outer periphery of the wall surrounding the tube connecting recess 4a and a female screw is formed on an inner surface of the main-body linking recess 4b.

The OUT-side main body 5 also has at its left end side almost a similar tube connecting recess 5a and at its right end side a spring housing portion 5b. The spring housing portion 5b is formed so as to have the same inside diameter as the valve housing space 4c. The tube connecting recess 5a and the spring housing portion 5b are in communication with each other via an OUT-side orifice channel portion 5c. Accordingly an axial through hole is also formed in the OUT-side main body 5. By linking the OUT-side main body 5 to the IN-side main body 4, a channel is formed which passes through the valve main body 1 along its axis.

A stepped surface between the OUT-side orifice channel portion 5c and the spring housing portion 5b acts as a spring receiving surface 5d on which the later described spring 7 is seated. A wall surrounding the spring housing portion 5b has at its outer periphery a male screw formed as a linking portion 5e. By driving and tightening this male screw to the female screw on the inner surface of the main body linking recess 4b in the IN-side main body 4, the OUT-side main body 5 is linked and sealed to the IN-side main body 4 in a coaxial manner.

In this linked state, the valve housing space 4c of the IN-side main body 4 and the spring housing portion 5b of the OUT-side main body 5 are assembled in an axially aligned manner, to house in this resultant linkage space 4c,5b the valve member 6 and the spring 7 which is in the form of a compressed coil spring.

As shown in Fig. 1C, the valve member 6 comprises at its right end side in the figure (hereinafter called front) a valve base 11 having a tapered valve portion 11a which decreases in diameter in the forward direction and a cylinder portion 11b extending from the left end side (hereinafter called rear) of the tapered valve portion 11a. Furthermore, a plurality of rearward extending slide guides 12 is provided on an outer periphery of the valve base 11. In this embodiment, as mentioned later, the plurality of slide guides 12 functions as a regulating means for regulating the amount of movement of the valve member 6 in the valve-opening direction and as a spring holding means for suppressing radial displacement of the spring 7.

The slide guides 12 project outward in a radial direction from their respective mounting positions evenly spaced from each other in a circumferential direction on an outer peripheral surface of the cylinder portion 11b of the valve base 11. Additionally, they extend rearward beyond the rear end surface of the cylinder portion 11b. The axial core side of each of the slide guides 12 is stepped so that the cylinder 11b side may serve as a spring receiving portion 12a and its rear portion may serve as a spring fitting portion 12b. That is, a spacing between the spring receiving portions 12a, which mutually face each other across the axial core therebetween, is smaller than the inside diameter of the spring 7 and that between the spring fitting portions 12b is sized to correspond with the outside diameter of the spring 7 enabling it to be fitted therebetween. Also, the axial length of the spring fitting portions 12b is set so as not to disturb an appropriate compressing function of the spring 7.

In this arrangement, by inserting the front end side of the spring 7 to the inside of each spring fitting portion 12b, the spring 7 can be held on the same axis as the valve member 6 and, at the same time, the front end of this spring 7 abuts against the stepped surface between the spring receiving portion 12a and the spring fitting portion 12b.

Thus, as shown in Fig. 1B, the valve member 6 and the spring 7 is housed in the valve housing space 4c and the spring housing portion 5b. In this assembled state, the valve member 6 is urged forward by a biasing force of the spring 7. Accordingly, the tapered valve portion 11a of the valve member 6 abuts the entire circumference of the valve seat 4e establishing the valve-closed state where communication is prohibited between the IN-side orifice channel 4d and the valve housing space 4c.

The outward radial surfaces of the slide guides 12 are configured to slidably engage with the inner circumferential surfaces of the valve housing space 4c and the spring housing portion 5b. Hence, the valve member 6 and the spring 7 are held on the same axis as the IN-side orifice channel 4d and the OUT-side orifice channel 5c.

On the outer periphery of the front end side of the IN-side main body 4 and the rear end side of the OUT-side main body 5 is formed a male screw to which each of the above-mentioned nuts 3 is screwed. By inserting a sleeve 13 into each of the tubes 2, then inserting the tubes into the tube connecting recesses 4a and 5a and then fitting the above-mentioned nuts 3 to the above-mentioned male screws respectively and tightening them axially, the tubes 2 are connected to the front end portion of the IN-side main body 4 and the rear end portion of the OUT-side main body 5 respectively.

The sleeves 13, for examples those at the front end side for connecting the tube 2 to the IN-side main body 4, each have a through hole 13a having a diameter almost the same as the inside diameter of the IN-side orifice channel 4d and on the outer periphery side an expansion portion 13b having a diameter larger than the inside diameter of the tube 2. By fitting the nut 3 to the front end side of the IN-side main body 4 and tightening it axially, the rear end side of the sleeve 13 is pressed tight to the inner surface of the tube connecting recess 4a, thereby sealing off the sleeve 13 and the IN-side main body 4.

At the same time, the end portion of the tube 2 is sandwiched between the wall surrounding the tube connecting recess 4a and the expansion portion 13b, the surfaces of which are urged towards each other by the tightening of the nut 3. Thus the tube 2 is connected to the IN-side main body 4 in a liquid-tight state. The sleeve 13 on the rear end side for connecting the tube 2 to the OUT-side main body 5 is also shaped in a similar manner, so that when the nut 3 is tightened, as mentioned above, the tube 2 is connected to the OUT-side main body 5 in a liquid-tight manner.

The tubes 2 are thus connected at the opposite ends, which permits for example washing water or a chemical solution to flow through the forward tube 2 and the through hole 13a in the sleeve 13 to the IN-side orifice channel 4d, so that if a fluid pressure on the valve base 11 of the valve member 6 exceeds the biasing force of the spring 7 in the valve-closing direction, as shown in Fig. 1D, the valve member 6 moves rearward, to provide the valve-opened state where the tapered valve portion 11a is separated from the valve seat 4e.

In this arrangement, as indicated by a broken-line arrow in the figure, fluid is permitted to flow from the IN-side orifice channel 4d into the valve housing space 4c. Then, the fluid passes by the valve base 11 through the valve housing space 4c, the spring housing portion 5b, the OUT-side orifice channel 5c, and the through hole 13a in the rear sleeve 13 into the rear tube 2, thus maintaining a direct flow through the check valve.

When the fluid pressure of the fluid flowing to the IN-side orifice channel 4d drops or when the fluid pressure on the rear side with respect to the valve portion 11a becomes higher than that on the front side, the resultant pressure difference and the biasing force of the spring 7 causes the valve member 6 to move forward, whereby the tapered valve portion 11a once again abuts the valve seat 4e, thus blocking reverse directional flow. Thus, the pressure difference between opposite sides of the valve portion 11a automatically switches the valve-opened state to the valve-closed state and vice versa, thereby maintaining the check valve functions for permitting only unidirectional flow.

In the valve-opened state, the spring 7 is compressed due to the fluid pressure on the upstream side of the valve member 6. In this state, the valve member 6 does not move rearward beyond a position shown in Fig. 1D. In this position, the rearward end surface of each of the slide guides 12 of the valve member 6 abuts against the spring receiving surface 5d, thereby preventing the valve member 6 from moving any more.

Therefore, the spring 7 is compressed to a maximum extent at the above-mentioned position and cannot be deformed any further. This prevents the spring 7 from undergoing excessive compressive deformation, so that even in a case where the spring 7 is made of a synthetic resin such as PFA, decreases due to stress relaxation in the biasing force can be suppressed. This suppresses a decrease in the biasing of the spring 7 which would otherwise occur if it underwent full compression and thus maintains stable check valve functions for a prolonged period.

When returning from the valve-opened state to the valve-closed state, the valve member 6 is urged to move along the axis of the main body 1 since the outward axial surface of each slide guide 12 is guided on the inner surface of the spring housing portion 5b or the valve housing space 4c. With this, the valve member 6 is held in abutment against the valve seat 4e everywhere on its circumference, thus preventing deviation from occurring in the abutment of the tapered valve portion 11a against the valve seat 4e. Hence, good sealing performance can be maintained in the valve-closed state.

Further, the spring 7 is prevented from being deformed in a radial direction because its outer periphery is surrounded by the slide guides 12, thereby providing such a configuration as to permit only axial deformation. Therefore, the spring 7 urges the valve member 6 in the axial direction only, thus suppressing a shift between the direction of action of the spring 7 and the valve-closing direction of the valve member 6. Therefore, this also causes the biasing force of the spring 7 to be uniformly applied around the axial core to the tapered valve portion 11a in abutment against the valve seat 4e, thus maintaining an even better sealing performance in the valve-closed state.

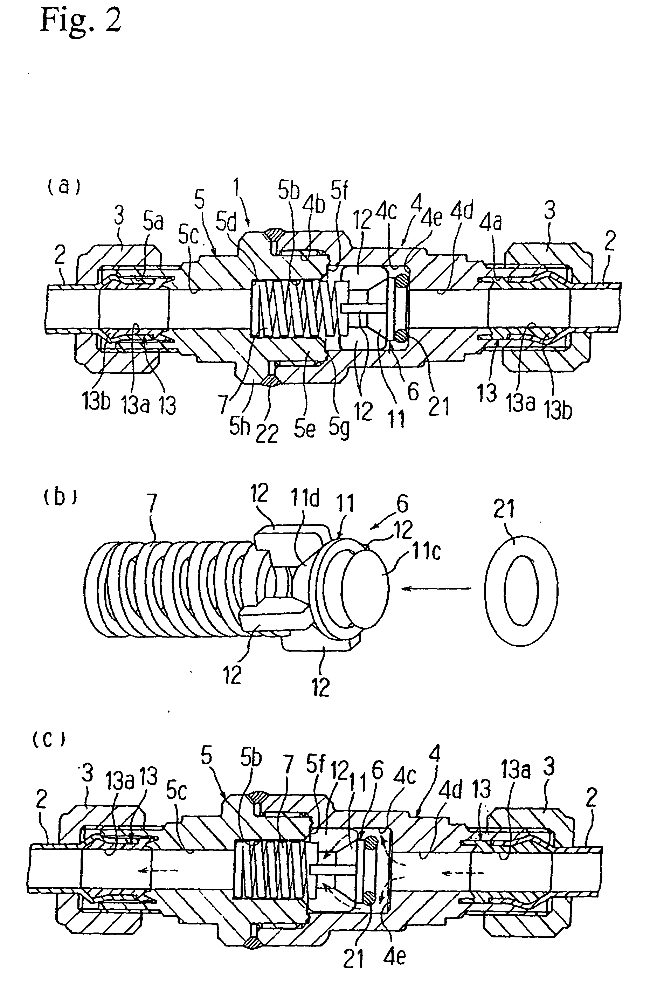

A check valve according to the second embodiment of the invention is shown in Figs. 2A-2C. For convenience, components having the same functions as those indicated in Figs. 1 are indicated by the same reference numerals, so that no further explanation is required here.

A check valve according to this embodiment has such a configuration shown in Fig 2A that the spring housing portion 5b of the OUT-side main body 5 is smaller in diameter than the valve housing space 4c of the IN-side main body 4. Furthermore, its inside diameter is set to match the outside diameter of the spring 7 so that the spring 7 may be positioned within the spring housing portion 5b.

The valve member 6 housed in the valve housing space 4c has a valve base 11 comprising at the right end side a seal ring mounting portion 11c and a reverse tapered conical station 11d having a rearward decreasing diameter placed behind the seal ring mounting portion 11c.

The seal ring mounting portion 11c has a circumferential groove on its outer periphery to accommodate a seal ring 21 consisting of an O-ring having a circular cross section. The O-ring has a slightly larger diameter than the axial thickness of the seal ring mounting portion 11c.

Therefore, when the seal ring 21 is mounted on the seal ring mounting portion 11c, it projects forward beyond the end surface of the seal ring mounting portion 11c. Accordingly, the seal ring 21 is capable of engaging with and disengaging from the valve seat 4e to prevent and permit fluid flow. The seal ring 21 is made of a fluorine rubber, or similar material, having a larger elasticity than the synthetic resin such as PFA from which the valve member 6 and the check valve main body 1 are made.

Four slide guides 12 are provided at positions evenly spaced about the outer periphery of the conical station 11d. As in the previous embodiment, these protrude radially outward and extend rearward from the conical station 11d.

They do, however, have a shorter rearward length. A spring 7 is formed integrally with and extends rearward from the rear end of these slide guides 12.

With the seal ring 21 mounted on the seal ring mounting portion 11c of the valve member the valve member 6 and spring 7 are housed as shown in Fig. 2A in the valve housing space 4c and the spring housing portion 5b.

As in the previous embodiment, the valve seat 4e is formed at a stepped surface between the IN-side orifice channel 4d and the valve housing space 4c. Furthermore, the slide guides 12 of the valve member 6 are configured so as slide along the inner surface of the valve housing space 4c as mentioned above. Also, since the spring housing portion 5b has a smaller diameter than the valve housing space 4c, the stepped surface between these provides a movement regulating surface 5f facing, in an axial direction, the rear end surface of each slide guide 12 with a predetermined spacing therebetween.

On the OUT-side main body 5 of this embodiment, on the other hand, a lip sealing portion 5g is provided which projects toward the IN-side main body 4. The lip sealing portion extends around the entire circumference at the right end surface of the linking portion 5e surrounding the spring housing portion 5b.

The IN-side main body 4 and the OUT-side main body 5, which house the valve member 6 and spring 7, are screwed together in much the same way as in the previous embodiment. In this case, the lip sealing portion 5g is screwed into abutment against the stepped surface between the valve housing space 4c and the main body linking recess 4b of the IN-side man body 4 providing a more secure sealing between the IN-side main body 4 and the OUT-side main body 5.

Also, with the check valve according to this embodiment, after the IN-side main body 4 and the OUT-side main body 5 are secured to each other, the rear side outer periphery of the IN-side main body 4 and the adjacent outer periphery of an annular flange-shaped portion 5h of the OUT-side main body 5 are welded together, thus forming a weld portion 22 which seals the two along their circumference. Therefore, this weld portion 22 gives further secondary sealing between the IN-side main body 4 and the OUT-side main body 5.

In the condition as shown in Fig. 2A, the valve member 6 is urged forward by a biasing force of the spring 7 causing the sealing ring 21 to abut the valve seat 4e. In this valve-closed state, the IN-side orifice channel 4d is blocked. If, in this state, the pressure of a fluid flowing to the IN-side orifice channel 4d exceeds the biasing force of the spring 7, the valve member 6 moves rearward, as shown in Fig. 2C, thus providing the valve-opened state where the sealing ring 21 is separated from the valve seat 4e.

In this case, if the rear end surface of each slide guide 12 abuts against the valve movement regulating surface 5f interposed between the valve housing space 4c and the spring housing portion 5b when the valve member 6 moves rearward as the fluid pressure increases, the valve member 6 is prevented from moving any further. Therefore, the spring 7 is compressed to a maximum extent in this position. In this arrangement, deterioration in the biasing force of the spring 7 can be suppressed, thus maintaining stable check valve functions for a prolonged period.

Also, when the valve member 6 returns from the valve-opened state to the valve-closed state, the radial outward end surface of each slide guide 12 is guided along the inner surface of the spring housing portion 5b, ensuring that the sealing ring 21 is uniformly abuts against the entire circumference of the valve seat 4e, thus maintaining a good sealing performance in the valve-closed state.

Further, since the spring 7 is almost entirely fitted into the spring housing portion 5b and so prevented from being deformed in a radial direction, the spring 7 is kept free of creep deformation in a radial direction as mentioned above and a good sealing performance is achieved in the valve-closed state. Hence, as in the previous embodiment the slide guides 12 provide a valve member movement regulating means, while the spring housing portion 5b provides spring holding means for suppressing radial displacement of the spring 7.

In this embodiment, however, since the spring 7 is integrally formed with the valve member 6 in a coaxial manner, there is no possibility of shift occurring between the spring 7 and the valve member 6 in the axial direction, thus a better sealing performance is achieved.

In contrast to a prior art check valve having a ball valve and a spring configured separately from each other whereby if a pressure fluctuation such as that induced by a water hammer from the inside or outside of the pipeline, the ball valve and the spring may be separated to give rise to a shift in a relative positional relationship therebetween, thus disabling correct check valve functions, in the check valve of this embodiment the spring 7 is integral with to the valve member 6, even when such a pressure fluctuation is applied and accordingly the spring 7 cannot become separated from the valve member 6, thus further stabilising check valve functions.

Additionally, this embodiment employs a highly elastic sealing ring 21 to engage with and disengage from the valve seat 4e. If both the valve seat 4e and the sealing ring were made of the same material such as PFA, upon repeated valve-closing operation, plastic deformation may develop locally at a position where stress is concentrated, thus deteriorating sealing performance. To guard against this, one of the two is formed of a material having higher elasticity than the other to relax the concentration of the stress, in order to keep a uniform sealing everywhere on the circumference, thus maintaining good sealing performance.

Further, the check valve according to this embodiment employs, between the IN-side main body 4 and the OUT-side main body 5, a primary sealing established by the lip sealing portion 5g and a secondary sealing by the weld portion 22, thus making it possible to completely preventing an internal fluid from leaking out. In particular, for example, a check valve controlling the flow of a high purity chemical or pure water used in a semiconductor manufacturing process would malfunction if dust or any other debris due were to ingress through the junction between the IN-side main body 4 and the OUT-side main body 5. Therefore, by providing the above-mentioned configuration for complete leakage prevention by use of such welding as described above, a check valve can be provided which is appropriate for semiconductor or LCD manufacturing processes.

Although the specific embodiments of the invention have been described above, the invention is not limited to them but may be modified in a variety of ways within a scope of the invention. For example, although such the check valves have been exemplified in that the various components are made of PFA, other synthetic resins such as PTFE, ETFE, CTFE, and ECTFE also exhibit excellent chemical resistant and heat resistant so combinations thereof may be employed to form these various components.

Also, although the check valve has been exemplified as having a union joint configuration with a joint at opposing ends to which the tubes 2 are connected, it is possible to apply the invention also to such a check valve that has a configuration for providing one end with, for example, a tube-use tapered male or female screw. Also, although the second embodiment has been described with respect to such a configuration that the sealing ring 21 in the form of an O-ring is provided as the sealing member, the sealing member may be made of, for example, a rubber cap or any other highly elastic material.

## Claims

1. A check valve comprising:
a check valve main body (1) having a channel (4d,4c,5b,5c) passing therethrough;
a valve member (6) provided within the channel (4d,4c,5b,5c) for opening and closing the channel (4d,4c,5b,5c);
a spring (7) urging the valve member (6) in a valve-closing direction such that when a fluid pressure in excess of a biasing force of the spring (7) is applied to the valve member (6) in a valve-opening direction, the spring (7) is compressed and the valve member (6) moves in the valve-opening direction to open the channel (4d,4c,5b,5c);
regulating means (12,5d,5f) for regulating an amount of movement of the valve member (6) in the valve-opening direction in order to prevent full compression of the spring (7); and
spring holding means (12b,5b) to suppress radial displacement of the spring (7);
**CHARACTERISED IN THAT**
the check valve main body (1), the valve member (6) and the spring (7) are made from a synthetic resin; and
the spring (7) is integrally formed with the valve member (6).

2. A check valve according to claim 1, wherein a valve-closing directional side of the valve member (6) is provided with a sealing member (21) having higher elasticity than the valve member (6).

3. A check valve according to claim 1 or claim 2, wherein the check valve main body (1) is divided across the channel (4d,4c,5b,5c) into an upstream-side main body (4) and a downstream-side main body (5).

4. A check valve according to claim 3, wherein a lip sealing portion (5g) extending in a direction of the channel (4d,4c,5b,5c) is provided at a junction where the upstream-side main body (4) and the downstream-side main body (5) face each other.

5. A check valve according to claim 3 or claim 4, wherein the upstream-side main body (4) and the downstream-side main body (5) are sealed together by welding of an outer periphery of a junction where the upstream-side main body (4) and the downstream-side main body (5) face each other.

6. A check valve according to any preceding claim, wherein the synthetic resin is a fluororesin.

## Patentansprüche

1. Ein Rückschlagventil, das Folgendes umfasst:
einen Rückschlagventil-Hauptkörper (1), der einen hindurch verlaufenden Kanal (4d, 4c, 5b, 5c) aufweist;
ein innerhalb des Kanals (4d, 4c, 5b, 5c) vorhandenes Ventilelement (6) zum Öffnen und Schließen des Kanals (4d, 4c, 5b, 5c);
eine Feder (7), die das Ventilelement (6) in eine Ventilschließrichtung drängt, so dass, wenn ein eine Vorspannkraft der Feder (7) übersteigender Flüssigkeitsdruck auf das Ventilelement (6) in einer Ventilöffnungsrichtung ausgeübt wird, die Feder (7) gestaucht wird und sich das Ventilelement (6) in die Ventilöffnungsrichtung zum Öffnen des Kanals (4d, 4c, 5b, 5c) bewegt; Regeleinrichtung (12, 5d, 5f) zum Regeln eines Bewegungsbetrags des Ventilelements (6) in der Ventilöffnungsrichtung, um vollständige Stauchung der Feder (7) zu verhindern; und
Federhaltevorrichtung (12b, 5b) zur Unterdrückung der Radialverschiebung der Feder (7);
**dadurch gekennzeichnet, dass**
der Rückschlagventil-Hauptkörper (1), das Ventilelement (6) und die Feder (7) aus einem synthetischen Harz bestehen; und
die Feder (7) mit dem Ventilelement (6) integral geformt ist.

2. Ein Rückschlagventil gemäß Anspruch 1, wobei eine direktionale Ventilschließseite des Ventilelements (6) mit einem Dichtungselement das eine höhere Elastizität als das Ventilelement (6) aufweist, versehen ist.

3. Ein Rückschlagventil gemäß Anspruch 1 oder Anspruch 2, wobei der Rückschlagventil-Hauptkörper (1) über den Kanal (4d, 4c, 5b, 5c) in einen vorgeschalteten Hauptkörper (4) und einen nachgeschalteten Hauptkörper (5) unterteilt ist.

4. Ein Rückschlagventil gemäß Anspruch 3, wobei ein Lippendichtungsabschnitt (5g), der sich in einer Richtung des Kanals (4d, 4c, 5b, 5c) erstreckt, an einer Verbindungsstelle vorhanden ist, wo der vorgeschaltete Hauptkörper (4) und der nachgeschaltete Hauptkörper (5) einander gegenüber sind.

5. Ein Rückschlagventil gemäß Anspruch 3 oder Anspruch 4, wobei der vorgeschaltete Hauptkörper (4) und der nachgeschaltete Hauptkörper (5) miteinander versiegelt sind durch Schweißen einer äußeren Peripherie einer Verbindungsstelle, wo der vorgeschaltete Hauptkörper (4) und der nachgeschaltete Hauptkörper (5) einander gegenüber sind.

6. Ein Rückschlagventil gemäß einen vorangegangenen Anspruchs, wobei es sich beim synthetischen Harz um ein Fluoresin handelt.

## Revendications

1. Clapet antiretour comportant :
un corps principal de clapet antiretour (1) ayant un conduit (4d, 4c, 5b, 5c) passant au travers de celui-ci ;
un organe de clapet (6) mis en oeuvre à l'intérieur du conduit (4d, 4c, 5b, 5c) pour ouvrir et fermer le conduit (4d, 4c, 5b, 5c) ;
un ressort (7) poussant l'organe de clapet (6) dans une direction de fermeture de clapet de telle manière que lorsqu'une pression du fluide supérieure à une force d'activation du ressort (7) est exercée sur l'organe de clapet (6) dans une direction d'ouverture de clapet, le ressort (7) est comprimé et l'organe de clapet (6) se déplace dans la direction d'ouverture de clapet pour ouvrir le conduit (4d, 4c, 5b, 5c) ;
des moyens de régulation (12, 5d, 5f) destinés à réguler une quantité de mouvement de l'organe de clapet (6) dans la direction d'ouverture de clapet de telle manière à éviter toute compression entière du ressort (7) ; et
des moyens de retenue du ressort (12b, 5b) destinés à supprimer tout déplacement radial du ressort (7) ;
**caractérisé en ce que**
le corps principal du clapet antiretour (1), l'organe de clapet (6) et le ressort (7) sont réalisés à partir d'une résine synthétique ; et
le ressort (7) est formé de manière intégrale avec l'organe de clapet (6).

2. Clapet antiretour selon la revendication 1, dans lequel un côté directionnel de fermeture de clapet de l'organe de clapet (6) est mis en oeuvre avec un organe d'étanchéité (21) ayant une élasticité supérieure à l'organe de clapet (6).

3. Clapet antiretour selon la revendication 1 ou la revendication 2, dans lequel le corps principal du clapet antiretour (1) est divisé en travers du conduit (4d, 4c, 5b, 5c) en un corps principal côté amont (4) et un corps principal côté aval (5).

4. Clapet antiretour selon la revendication 3, dans lequel une portion d'étanchéité de type lèvre (5g) se prolongeant dans une direction du conduit (4d, 4c, 5b, 5c) est mise en oeuvre au niveau d'une jonction où le corps principal côté amont (4) et le corps principal côté aval (5) se font face.

5. Clapet antiretour selon la revendication 3 ou la revendication 4, dans lequel le corps principal côté amont (4) et le corps principal côté aval (5) sont scellés ensemble par la soudure d'une périphérie extérieure d'une jonction où le corps principal côté amont (4) et le corps principal côté aval (5) se font face.

6. Clapet antiretour selon l'une quelconque des revendications précédentes, dans lequel la résine synthétique est une résine fluorée.
